# EUROPÄISCHE PATENTSCHRIFT

(11) **EP 3 408 200 B1**
(45) Veröffentlichungstag und Bekanntmachung des Hinweises auf die Patenterteilung: **08.01.2020**
(21) Anmeldenummer: 17700890.1
(22) Anmeldetag: 19.01.2017
(51) Int. Cl.: B65G 69/18, B65B 39/00, F16L 31/02

(54) **TRANSPORTSYSTEM FÜR SCHÜTT- UND FLIESSFÄHIGE MEDIEN MIT EINER KUPPLUNGSEINRICHTUNG**
TRANSPORT SYSTEM FOR POURABLE AND FLOWABLE MEDIA HAVING A COUPLING DEVICE
SYSTÈME DE TRANSPORT POUR SUBSTANCES APTES AU VERSEMENT ET À L'ÉCOULEMENT LIBRE, POURVU D'UN SYSTÈME D'ACCOUPLEMENT

(30) Priorität: 29.01.2016 DE 102016000979
(43) Veröffentlichungstag der Anmeldung: 05.12.2018
(73) Patentinhaber: FLECOTEC AG, 79410 Badenweler (DE)
(72) Erfinder: KOCH, Martin, DK-2500 Valby (DK)
(74) Vertreter: Bartels, Martin Erich Arthur
(86) Internationale Anmeldenummer: PCT/EP2017/000064
(87) Internationale Veröffentlichungsnummer: WO 2017/129353

(56) Entgegenhaltungen:
- WO-A1-2014/049197
- CN-A- 101 531 283
- GB-A- 2 465 180
- US-A- 2 754 982

## Beschreibung

Die Erfindung betrifft ein Transportsystem für schütt- und fließfähige Medien mit einer Kupplungseinrichtung mit den Merkmalen im Oberbegriff von Anspruch 1.

Ein dahingehendes Transportsystem ist durch die Gebrauchsmusterschrift DE 20 2010 015 525 U1 aufgezeigt. Das bekannte Transportsystem weist als Kupplungseinrichtung einen wieder öffenbaren Verschluss mit zwei Profilleisten auf, die jeweils ein Anschlussteil ausbilden und nach dem Öffnen des Verschlusses ist ein vorgebbarer Transportweg für schütt- und fließfähige Medien freigegeben. Die beiden genannten Anschlussteile stehen jeweils mit einem flexiblen, schlauchförmigen Verbindungsteil in medienführender Verbindung, wobei das eine Verbindungsteil an seinem freien Ende in einen Kupplungsring ausmündet zwecks Andocken des bekannten Transportsystems an eine übliche Medien-Abgabeeinrichtung. Das andere schlauchförmige Verbindungsteil bildet als Ganzes einen Transportbeutel aus, der bei geöffnetem Verschluss oder Kupplung das von der Medien-Abgabeeinrichtung abgegebene Medium portionsweise aufnimmt, und für einen Weitertransport ist der Beutel nach Schließen des Verschlusses von der Kupplung für den Weitertransport an eine andere Stelle abnehmbar.

Mithin ist mit der bekannten Lösung ein Transportsystem nebst Kupplungseinrichtung geschaffen zum umweltdichten Verbinden der beiden flexiblen schlauchförmigen Verbindungsteile miteinander sowie zum umweltdichten Führen eines Mediendurchflusses in einer Durchflussrichtung durch den Verschluss oder die Kupplung von dem ersten Verbindungsteil durch den Verschluss oder die Kupplung hindurch in das beutelförmig ausgebildete weitere Verbindungsteil, das insofern bis auf den Beutelboden gleichfalls einen Verbindungsschlauch ausbildet. Beide Profilleisten weisen quer zu der Durchflussrichtung ausgerichtete Verschlusselemente auf, die in der Art einer Verhakungsverbindung ineinander zu greifen bestimmt sind. Vorzugsweise dient zum Verbinden und Trennen der Anschlussteile ein von den zugehörigen Profilleisten abnehmbarer Gleiter, der zum Verbinden quer zu der Durchflussrichtung auf die jeweils verschlossenen Anschlussteile aufschiebbar ist. Ist die vorstehend angesprochene Kupplung wieder voneinander getrennt, schließen die angesprochenen Profilleisten oder Anschlussteile sowohl die freie Beutelöffnung ab als auch die dem Beutel zugewandte Öffnung des schlauchförmigen Verbindungsteils, das zu der Medien-Abgabeeinrichtung führt. Detaillierter ist ein solcher Gleiter auch der EP 2 421 758 B1 zu entnehmen.

Bei der Weiterverarbeitung von Rohstoffen in Form von schütt- oder fließfähigen Medien, die bei direktem Kontakt eine erhebliche Gesundheitsgefährdung für die mit diesen Stoffen arbeitenden Menschen darstellen können, ist in vielen Industriezweigen, insbesondere in der Pharma- oder Chemieindustrie auf erhöhte Sauberkeit und ein absolut kontaminationsfreies Arbeiten zu achten. Auch bei geringeren Anforderungen an die Kontaminationsfreiheit wird ein erheblicher Aufwand betrieben, um ein Entleeren von zumindest teilweise flexiblen Gebinden wie Säcken oder Beuteln in eine Produktionseinheit mit vorgeschalteter Medien-Empfangseinrichtung oder in ein anderes flexibles Gebinde sicher zu ermöglichen.

Um eine solche Kontaminationsfreiheit zu ermöglichen, sind im Stand der Technik, neben den bereits angesprochenen Profilleisten-Verbindungssystemen, weitere Kupplungslösungen im Einsatz. Eine anders geartete wieder lösbare Kupplungseinrichtung unter Verwendung von ineinandergreifenden Kupplungsringen ist in der DE 10 2010 105 233 A1 aufgezeigt. So betrifft diese bekannte Kupplungslösung ein Verfahren zum Verbinden zweier flexibler, schlauchartiger Gebinde oder von schlauchförmigen Verbindungsteilen mit den folgenden Verfahrensschritten:
- Umlegen eines ersten offenen Endbereiches eines ersten Gebindes von innen nach außen um einen ersten Ring derart, dass eine Manschette entsteht, die in axialer Richtung gesehen sich von dem ersten Ring weg erstreckt und das erste Gebinde zumindest teilweise umfasst;
- Umlegen eines zweiten offenen Endbereiches eines zweiten Gebindes von innen nach außen um einen zweiten Ring derart, dass eine weitere Manschette entsteht, die in axialer Richtung gesehen sich von dem zweiten Ring weg erstreckt und das zweite Gebinde zumindest teilweise umfasst;
- Einführen des einen Ringes in den jeweils anderen Ring mit seinem angeschlossenen Gebinde hinein;
- paralleles und koaxiales Ausrichten der beiden Ringe zueinander; und
- Zuranlagebringen der Ringe mit dazwischen eingeklemmtem Folienmaterial.

Bei hergestellter Kupplung können selbst toxikologisch bedenkliche Stoffe oder empfindliche Arzneimittelstoffe transportiert werden, die nicht unmittelbar mit dem Luftsauerstoff der Umgebung in Verbindung kommen sollen. Die dahingehende Kupplungseinrichtung lässt sich von Hand schnell herstellen; aber auch ohne Weiteres wieder lösen.

Obwohl sich die vorstehend beschriebenen Transportsysteme nebst Kupplungseinrichtungen in der Praxis bestens bewährt haben, setzen insbesondere die Pharma-Anwender solche Systeme zum Befüllen und Entleeren aktiver Substanzen lediglich ca. fünfmal ein, in manchen Fällen auch fünf- bis zehnmal, um diese nach der dahingehenden Nutzung zu demontieren und sachgerecht zu entsorgen. Häufig ist das zu transportierende, schüttfähige Medium in Form eines Arzneimittels in Pulverform ausgeführt, und beim dahingehenden Pulvertransfer kommt es regelmäßig zum Klemmen respektive Versagen der bekannten Kupplungen und Andocksystemen, insbesondere wenn die angesprochenen Profilleisten eingesetzt werden, oder es kommt ungewollt zu einem Austritt von sehr feinem, staubartigen Pulver, beispielsweise wenn die ineinandergreifenden Kupplungsringe im Rahmen des Transportsystems Verwendung finden und das Pulver sich außerhalb des Kupplungseingriffs auf den Schlauchteilen absetzt, was darüber hinaus weitere Kupplungsvorgänge erschwert oder gar unmöglich macht.

Die DE 38 50 267 T2 offenbart ein gattungsgemäßes Transportsystem für schütt- und fließfähige Medien mit einer Kupplungseinrichtung, bestehend aus mindestens einem ersten Anschlussteil und mehreren weiteren Anschlussteilen, die mittels flexiblen, schlauchförmigen Verbindungsteilen mit dem jeweils ersten Anschlussteil verbunden sind, die mittels mindestens einer Schließeinrichtung sperrbar sind, nach deren Lösen das jeweils zuordenbare Verbindungsteil für einen Medientransport freigegeben und nach erfolgtem Medientransport entlang eines vorgebbaren Transportweges dieser mittels einer separaten Blockiereinrichtung blockiert oder von der Schließeinrichtung erneut verschlossen ist, wobei das jeweilige Verbindungsteil ein Schlauchteil aufweist, und wobei die einzelnen Schlauchteile nacheinander folgend derart miteinander verbunden sind, dass in Folge Verzweigungsstellen entstehen, die permanent medienführend mit dem ersten Schlauchteil in der Folge verbunden sind.

Die US 2 754 982, die WO 2014/049197 A1, die GB 2 465 180 A und die CN 101531283 A beschreiben weitere Transportsysteme.

Ausgehend von diesem Stand der Technik liegt daher der Erfindung die Aufgabe zugrunde, die bekannten Lösungen dahingehend weiter zu verbessern, dass ein Transportsystem geschaffen ist, das ein kontaminationsfreies Befüllen und Entleeren von Gebinden ermöglicht bei erhöhter Einsatz- oder Nutzungsdauer bei gleichzeitig niedrigen Entstehungs- und Betriebskosten. Eine dahingehende Aufgabe löst ein Transportsystem mit den Merkmalen des Patentanspruches 1 in seiner Gesamtheit.

Gemäß dem Kennzeichen des Anspruchs 1 zeichnet sich das erfindungsgemäße Transportsystem dadurch aus, dass das jeweilige Schlauchteil ein Folienschlauch ist und dass einzelne Folienschläuche, die zu den einzelnen weiteren Anschlussteilen führen, in Hintereinanderabfolge an Verzweigungsstellen mit dem jeweils vorangehenden Folienschlauch unter Freilassen einer Durchtrittsöffnung nebst Bildung eines durchgängigen Transportweges entlang von Schweißlinien miteinander verschweißt sind.

Erfindungsgemäß weist das Transportsystem für schütt- und fließfähige Medien auch eine Kupplungseinrichtung auf, bestehend aus mindestens einem ersten Anschlussteil und mehreren weiteren Anschlussteilen, die mittels flexiblen, schlauchförmigen Verbindungsteilen mit dem jeweils ersten Anschlussteil verbunden sind, die mittels mindestens einer ersten Schließeinrichtung sperrbar sind, nach deren Lösen das jeweils zuordenbare Verbindungsteil für einen Medientransport freigegeben und das nach erfolgtem Medientransport entlang eines vorgebbaren Transportweges dieser mittels einer separaten Blockiereinrichtung blockiert oder von der Schließeinrichtung erneut verschlossen ist.

Mit der erfindungsgemäßen Lösung ist es möglich, ein erstes Anschlussteil mit einem medienabgebenden System zu koppeln, beispielsweise in Form einer üblichen Medien-Abgabeeinrichtung in der Pharmaindustrie und dann in zeitlicher Hintereinanderabfolge die weiteren Anschlussteile, die mit dem ersten Anschlussteil medienführend in Verbindung stehen, nach erfolgten Medientransport für eine Medienabgabe an eine medienaufnehmende Komponente zu nutzen, beispielsweise in Form eines sackartigen Gebindes, eines Beutels oder einer in der Pharmaindustrie üblichen Medien-Empfangseinrichtung. Somit kommt im Falle des Unbrauchbarwerdens oder im Falle des Verschmutzens eines in der Abfüll- oder Abgabefolge vorangehenden weiteren Anschlussteils immer ein neues weiteres Anschlussteil zum Einsatz, das im Rahmen der ansonsten bestehenden medienführenden Kupplungseinrichtung den störungs- und kontaminationsfreien Medientransport ermöglicht. Treten, wie vorstehend beschrieben, Probleme auf oder zeichnen sich diese ab, ist dann das bisher eingesetzte weitere Anschlussteil zu deaktivieren und ein neues weiteres Anschlussteil, vorzugsweise in Sukzessionsfolge, der derart gebildeten Kassettenanordnung zu nutzen. Da jedes weitere Anschlussteil durchaus für fünf bis zehn Befüll- und/oder Entleervorgänge eingesetzt werden kann, erhöht sich in Abhängigkeit der Anzahl der weiteren Anschlussteile die Dauer der Nutzung für das erfindungsgemäße Transportsystem erheblich.

Da der dahingehende Wechsel unter den weiteren Anschlussteilen zielgerichtet und schnell erfolgen kann, werden nicht nur die Einsatzkosten für das Transportsystem reduziert, sondern auch die Kosten im Rahmen der praktischen Anwendung für das erfindungsgemäße Transportsystem. Selbstredend besteht auch umgekehrt eine Einsatzmöglichkeit, indem eben mehrere Anschlussteile jeweils der Aufnahme des Medienguts dienen und die einzige erste Anschlussstelle die Funktion der Medienabgabe übernimmt. Gegebenenfalls je nach Anwendungsfall lassen sich auch mehrere erste Anschlussteile mit mehreren weiteren Anschlussteilen in einer Kupplungseinrichtung zusammenfassen.

Als Schließeinrichtung können die bereits vorgestellten Profilleisten nach dem Gebrauchsmuster DE 20 2010 015 525 eingesetzt werden oder es werden von Hand betätigbare zweiteilige Verschlussleisten verwendet, die man fachsprachlich auch mit Sticklock bezeichnet. Ferner besteht die Möglichkeit, als einen den Transportweg unterbindende Blockiereinrichtung für die an die Anschlussteile jeweils angrenzenden schlauchförmigen Verbindungsteile auch in Form von Beuteln oder Säcken Clips einzusetzen, wobei zunächst mittels einer handelsüblichen Verschlusszange das schlauchförmige Verbindungsteil händisch zusammengepresst, insoweit gecrimpt und gleichzeitig mit einem Clip versehen wird. Es kann dann entweder mit einem eigenständigen Schneidwerkzeug oder mit einem Schneidwerkzeug, das mit der Verschlusszange in einem Betätigungswerkzeug bereits zusammengefasst ist, der mittels des Clips verschlossene schlauchförmige Verbindungsteil von seinen sonstigen Teilen für einen vorgesehenen Weitertransport des zugehörigen Gebindes separiert werden. Dahingehende Blockiereinrichtungen sind unter der Markenbezeichnung "Safe Seal" von der schweizerischen Firma Lugaia AG zu erhalten.

Weitere vorteilhafte Ausgestaltungen des Transportsystems sind Gegenstand der Unteransprüche. Im Folgenden wird das erfindungsgemäße Transportsystem anhand verschiedener Ausführungsformen nach der Zeichnung näher erläutert. Dabei zeigen in prinzipieller und nicht maßstäblicher Darstellung die
- Fig. 1: in der Art einer Funktionszeichnung eine Lösung nach dem Stand der Technik;
- Fig. 2 bis 4: eine der Fig. 1 angepasste Funktionsdarstellung, die einen Befüll- und Entleervorgang betrifft mit dem erfindungsgemäßen Transportsystem;
- Fig. 5 und 6: einmal in perspektivischer Schrägansicht, einmal in stirnseitiger Ansicht ein fachsprachlich mit Sticklock bezeichnetes Verschlussleisten-System;
- Fig. 7 und 8: zwei voneinander verschiedene Kupplungseinrichtungen, einmal mit Kupplungsringen, einmal mit Profilleisten; und
- Fig. 9: einen Teil eines Medientransportweges, bei dem zwei weitere Anschlussteile mit einem ersten Anschlussteil mittels Schweißverbindungen verbunden sind.

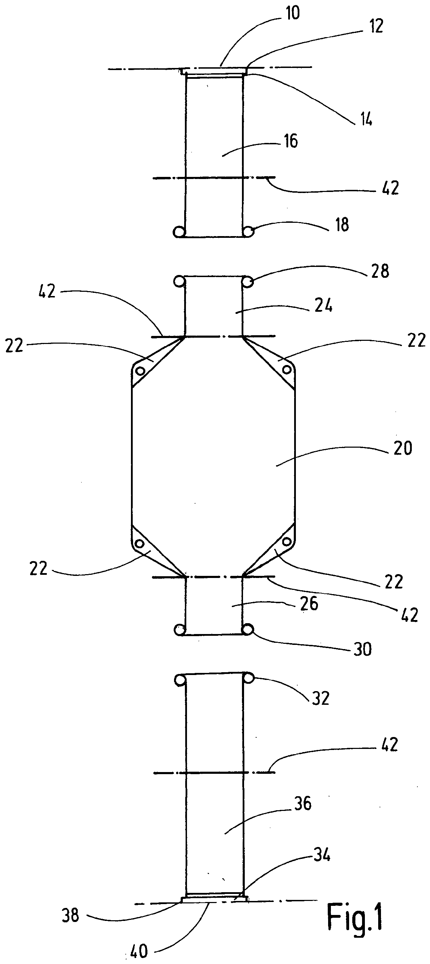

Die Fig. 1 zeigt in prinzipieller Darstellung ein Transportsystem, wie es in der Praxis in Gebrauch ist. In Blickrichtung auf die Fig. 1 gesehen befindet sich am oberen Ende eine nicht näher dargestellte Medien-Abgabeeinrichtung 10, über die schütt- und fließfähige Medien nach unten hin abgegeben werden können. Als Abgabemedien kommen schüttfähige Stoffe, wie Pulver, partikuläre Stoffe oder sonstige Feststoffe in Frage. Als fließfähige Medien dienen Fluide jedweder Art sowie rieselfähige Stoffe und pastöse Medien. Insbesondere in der chemisch-pharmazeutischen Industrie kommen solche Abgabeeinrichtungen 10 zum Einsatz, die mit üblichen nicht näher dargestellten Andocksystemen 12 versehen sind. Gemäß der Darstellung nach der Fig. 1 wird an das Andocksystem 12 ein erstes ringförmiges Anschlussteil 14 gleichfalls in üblicher Weise angedockt. An dieses erste Anschlussteil 14 schließt sich ein flexibles schlauchförmiges Verbindungsteil 16 an und am freien unteren Ende des Verbindungsteils 16 ist ein Kupplungsring 18 angeordnet, wie er im Einzelnen aufgrund seiner Kupplungsfunktion in der DE 10 2010 105 233 A1 aufgezeigt ist.

Unterhalb des Kupplungsringes 18 ist ein Transportgebinde dargestellt, das fachsprachlich mit Kannensack 20 bezeichnet ist. Die angesprochenen flüssigen oder festen Schüttgüter, die von der Medien-Abgabeeinrichtung 10 stammen, werden oftmals in solche Kannensäcke 20 oder Transportgebinde gefüllt und anschließend transportiert. Bei den Gebinden handelt es sich regelmäßig um zumindest teilweise flexibel ausgebildete Gebinde, wie Säcke, die beispielsweise in Container (nicht dargestellt) über Aufhängelaschen 22 für einen Transport eingehängt werden können. Die Gebinde werden bevorzugt aus Folien-Endlosschläuchen hergestellt und auf unterschiedliche Art und Weise als Schlauchabschnitte verwendet, die zumindest teilweise endseitig auch verschlossen werden können. Besonders häufig werden solche Gebinde zum Verpacken, Transportieren oder Lagern flüssiger oder fester Medien verwendet. Der Begriff "Gebinde" umfasst in dieser Anmeldung insoweit nicht nur vollkommen geschlossene flexible Beutel, sondern auch beispielsweise einen flexiblen und zu wenigstens zwei Seiten offenen Adapter oder einen Kannensack 20, wie dargestellt, der wiederum an ein Gerät oder an eine sonstige Abgabeeinrichtung angeschlossen werden kann.

An seinen beiden gegenüberliegenden Enden weist der Kannensack 20 zwei Verbindungsteile 24, 26 auf, wobei das obere Verbindungsteil 24 des Kannensacks 20 mit einem Kupplungsring 28 mit dem Kupplungsring 18 des Verbindungsteils 16 verbindbar ist, wie dies in der DE 10 2010 105 233 A1 im Einzelnen aufgezeigt ist. Das in Blickrichtung auf die Fig. 1 gesehen untere Verbindungsteil 26 weist einen Kupplungsring 30 auf, der mit einem Kupplungsring 32, wie bereits für die Kupplungsringe 18 und 28 erläutert, kuppelbar ist. Alle Kupplungsringe 18, 28, 30 und 32 sind elastisch nachgiebig und lassen sich in den freien Querschnitt des jeweils anderen Kupplungsringes eines für die Kupplung vorgesehenen Paares einsetzen, die von Hand in umgekehrter Reihenfolge auch wieder lösbar ist. Der untere Kupplungsring 32 ist Bestandteil des Gebindes oder Verbindungsteils 36, dessen unteres freies Ende wiederum in ein erstes Anschlussteil 34 ausmündet, das wiederum über ein übliches Andocksystem 38 mit einer üblichen, nicht näher dargestellten Medien-Empfangseinrichtung 40 anschließbar ist.

Zur Vereinfachung sind die Medien-Abgabeeinrichtung 10 und die Medien-Empfangseinrichtung 38 auf gegenüberliegenden Seiten der Fig. 1 dargestellt. In Wirklichkeit befinden sich diese regelmäßig an verschiedenen Orten und der befüllte Kannensack 20 ist von der Medien-Abgabeeinrichtung 10 zur Medien-Empfangseinrichtung 38 von Hand, per Container oder sonstwie maschinell zu transportieren.

In alle Verbindungsteile 16, 24, 26 und 36 sind gleich aufbauende und gleich wirkende Schließeinrichtungen 42 eingesetzt. Wird der Kannensack 20, was nicht näher dargestellt ist, an das Verbindungsteil 16 über die Kupplungsringe 18, 28 angekoppelt, werden die einander benachbarten beiden oberen Schließeinrichtungen 42 entfernt und der Kannensack 20 respektive das Transportgebinde kann über die Medien-Abgabeeinrichtung 10 mit Medium befüllt werden. Ist die gewünschte Füllung veranlasst, werden die Schließeinrichtungen 42 für das Verbindungsteil 16 und das Verbindungsteil 24 des Kannensacks 20 erneut angebracht, wobei die Schließeinrichtung 42 für den Kannensack 20 dessen Inneres gegenüber der Umgebung mediendicht abschließt. Da der Kannensack 20 auf seiner Unterseite auch noch über eine Schließeinrichtung 42 verschlossen ist, kann der Kannensack 20 mit seinem Transportgut nunmehr transportiert werden, beispielsweise in Richtung der Medien-Empfangseinrichtung 40. Für einen Entnahmevorgang wird der Kannensack 20 mit seinem Verbindungsteil 26 an das Verbindungsteil 36 angekuppelt, und zwar wiederum über Kupplungsringe, hier die Kupplungsringe 30 und 32. Nach Entfernen der Schließ-einrichtung 42 für das Verbindungsteil 36 wird dann die Schließeinrichtung 42 des Kannensacks 20 geöffnet und das im Kannensack 20 befindliche Gut oder Medium kann diesen verlassen und gelangt über das Andocksystem 38 auf die Seite der Medien-Empfangseinrichtung 40 zur Weiterverarbeitung.

In der Praxis ist es nun so, dass das gesamte in der Fig. 1 dargestellte Transportsystem auch im Umfang der Verbindungsteile 16 und 36 mit den jeweiligen ersten Anschlussteilen 14 bzw. 34 und dem zuordenbaren Kupplungsring 18 bzw. 32 nach etwa fünf bis maximal zehn Befüll- und Entleervorgängen mit aktiven Substanzen, wie eingangs beschrieben, entsorgt werden muss, weil entweder die Kupplungsvorgänge aufgrund von Verschmutzungen nicht mehr sicher funktionieren oder ungewollt, insbesondere staubförmige Medien vom Transportweg in die Umgebung treten können, was regelmäßig dann der Fall ist, wenn die Kupplungen aufgrund von Verschmutzungen nicht mehr in abdichtender Weise in Verbindung miteinander gebracht werden können.

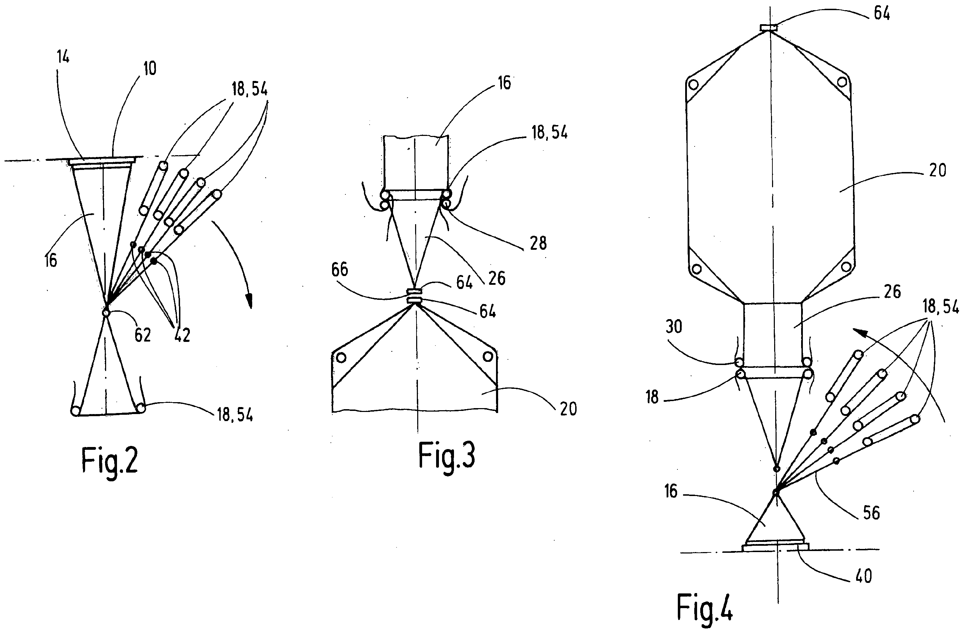

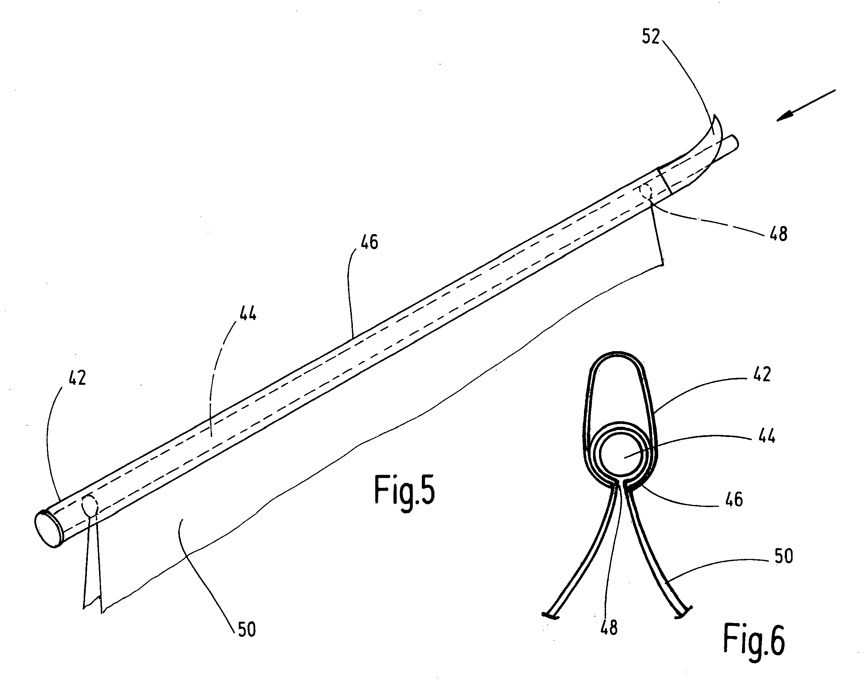

Bevor nun das erfindungsgemäße Transportsystem anhand der Fig. 2ff näher erläutert wird, sollen vorab anhand der Fig. 5 und 6 die in Fig. 1 aufgezeigten Schließeinrichtungen 42 in Form sog. Sticklocks näher erläutert werden, wobei die Fig. 6 eine stirnseitige Ansicht darstellt in Richtung des Pfeils auf die Fig. 5. Die Schließeinrichtung 42 weist einen stabförmigen zylindrischen Kern 44 auf, der unter Beibehalten eines vorgebbaren radialen Abstands von einem weiteren, nunmehr hohlzylindrischen Stab 46 umfasst ist, der in Blickrichtung auf die Fig. 5 und 6 gesehen, in der vorliegenden Anwendung auf seiner Unterseite einen durchgehenden Längsschlitz 48 aufweist.

Das Kunststoffmaterial des jeweiligen Folien-Gebindes wird nunmehr an seinem Abschnitt 50 zusammengefasst und um den stabförmigen Kern 44 herumgelegt. Der dahingehende Gebindeabschnitt 50 ist aufgrund seiner an sich hohlzylindrischen Gestaltung doppelwandig um den Kern 44 herumgeschlagen. Der Kern 44 wird anschließend mit dem Abschnitt 50 über eine Einführhilfe 52 am Ende des hohlzylindrischen Stabes 46 in diesen eingeführt, und zwar derart, dass die freien Enden des Gebindeabschnitts 50 aus dem Längsschlitz 48 des hohlzylindrischen Stabes 46 herausragen. Durch die nahezu 180°-Umlenkung des doppelwandigen Gebindeabschnitts 50 im Bereich des Längsschlitzes 48 ist ein mediendichter Verschluss des Transportweges innerhalb des Gebindes nebst seiner Abschnitte 50 erreicht. Zum Lösen der Schließeinrichtung 42 wird dann einfach der Kern 44 mit dem Gebindeabschnitt 50 wieder aus dem Stab 46 und dessen Längsschlitz 48 herausgezogen und der Transportweg innerhalb des Gebindes respektive des Gebindeabschnitts 50 ist wieder durchgängig freigegeben. Dahingehende Schließeinrichtungen sind unter der Markenbezeichnung "Sticklock" auf dem Markt frei erhältlich, so dass an dieser Stelle hier-auf nicht mehr näher eingegangen wird.

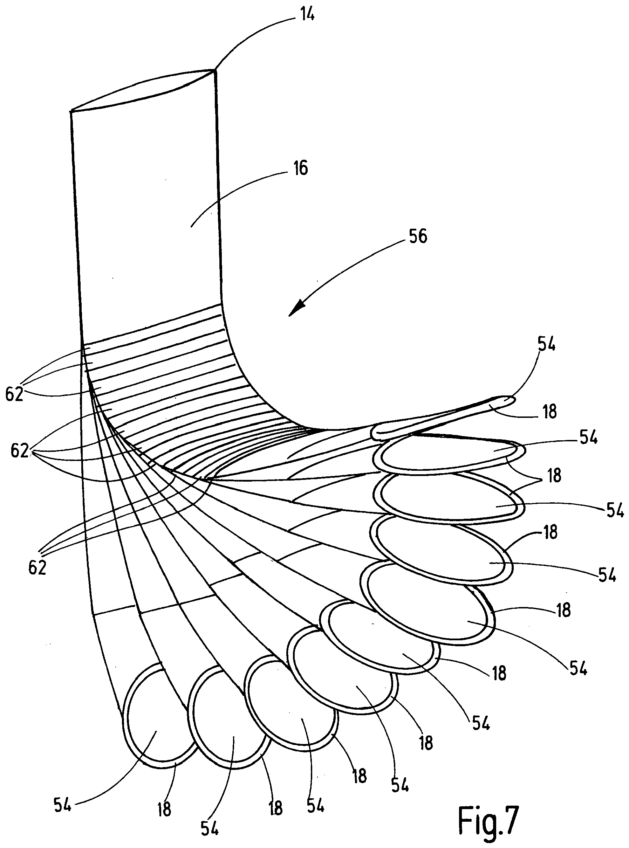

Die für das erfindungsgemäße Transportsystem nach den Fig. 2 bis 4 eingesetzte Kupplungseinrichtung 56 ist näher in der Fig. 7 dargestellt. Diese zeigt wiederum das flexible, schlauchförmige Verbindungsteil 16. In Blickrichtung auf die Fig. 7 gesehen ist wiederum am oberen freien Ende des Verbindungsteils 16 das erste Anschlussteil 14 vorhanden, das nicht näher dargestellt ist aber wie bei der Ausführungsform nach der Fig. 1 über einen Andockring verfügt für das Andocksystem 12 der Medien-Abgabeeinrichtung 10. An das eine erste Anschlussteil 14 sind dann zehn weitere Anschlussteile 54 am unteren Ende des Verbindungsteils 16 medienführend mit dem ersten Anschlussteil 14 an dieses flexibel angeschlossen. Die weiteren Anschlussteile 54 sind wiederum mit gleichen Kupplungsringen 18 versehen, wobei der jeweilige Kupplungsring 18 der Fig. 7 dem Kupplungsring 18 nach der Fig. 1 entspricht.

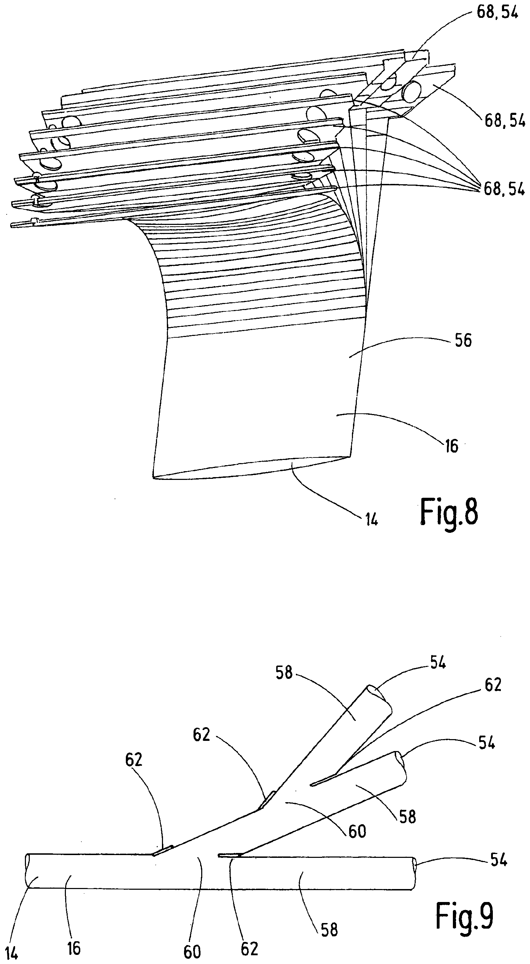

Anstelle der zehn weiteren Anschlussteile 54 kann natürlich auch eine kleinere oder größere Anzahl an weiteren Anschlussteilen 54 für eine dahingehend erfindungsgemäße Kupplungseinrichtung 56 vorgesehen sein. Wie die Medienführung respektive der Transportweg realisiert wird, ist in der Fig. 9 wiederum exemplarisch dargestellt. Dort ist erkennbar, dass einzelne Folienschläuche 58, die zu den einzelnen weiteren Anschlussteilen 54 führen, in Hintereinanderabfolge an Verzweigungsstellen 60 mit dem jeweils vorangehenden Folienschlauch 58 unter Freilassen einer Durchtrittsöffnung nebst Bildung des durchgängigen Transportweges miteinander verschweißt sind, wobei die Schweißlinien in den Fig. 7 und 9 mit 62 bezeichnet sind. Um ein ungewolltes Verschweißen der Folienbahnen untereinander zu vermeiden, werden entlang der Verzweigungsstellen 60 in die Folienschläuche 58 temperaturbeständige Abdeckungen (nicht dargestellt) eingebracht, die beim Schweißvorgang das jeweils darunterliegende Folienmaterial vor thermischer Beschädigung schützen.

Wie die Fig. 2 und 4 zeigen, ist die in Fig. 7 dargestellte Kupplungseinrichtung aufseiten der Medien-Abgabeeinrichtung 10 angeordnet und in umgekehrter Anordnung, wie in Fig. 7 dargestellt, ebenso aufseiten der Medien-Empfangseinrichtung 40. Der Einfachheit halber sind in den Fig. 2 und 4 nur fünf weitere Anschlussteile 54 eingezeichnet und nicht zehn, wie in Fig. 7. Gemäß der Darstellung nach der Fig. 2 sind vier weitere Anschlussteile 54 nach rechts oben weggeklappt und das erste weitere Anschlussteil 54 in der Reihenfolge ist in die Kupplungsstellung für ein anzuschließendes Transportgebinde, wie einen Kannensack 20, gebracht. Sofern die einander gegenüberliegenden Wände des Verbindungsteils 16 entlang der Schweißlinie 62 noch aneinanderhaften, werden diese unter Freigabe des Transportweges auseinandergedrückt, sobald Füllgut vonseiten der Abgabeeinrichtung 10 in das Verbindungsteil 16 und weiter in Richtung des Kannensacks 20 gelangt.

Wie auch im Stand der Technik beschrieben, wird dann der Kannensack 20 über seinen Kupplungsring 28 mit dem Kupplungsring 18 des weiteren Verbindungsteils 54 mediendicht gekoppelt und dergestalt ein Transportweg von der Abgabeeinrichtung 10 über das Verbindungsteil 16 und das Verbindungsteil 26 des Kannensacks 20 hergestellt, so dass Medium in den Kannensack 20 gelangen kann, sobald die Schließeinrichtung 42 für das Verbindungsteil 16, wie dargestellt, entfernt ist. Ist der Kannensack 20 gemäß der Darstellung nach der Fig. 3 befüllt, wird mit einer nicht näher dargestellten Verschlusszange der Transportweg oberhalb der Öffnung des Kannensacks 20 vercrimpt und zwei Clipse 64 werden mit einer nicht näher dargestellten Crimpeinrichtung gesetzt, die Teil der Verschlusszange sein kann. Anschließend wird das Folienmaterial zwischen den beiden Clipsen 64 unter Bildung einer Trennstelle 66 durchtrennt und der Kannensack 20 ist gemäß der Darstellung nach der Fig. 4 freigegeben und auf seiner Oberseite dicht verschlossen. Anschließend wird der Kannensack 20 gemäß der Darstellung nach der Fig. 4 an die Kupplungseinrichtung 56 nach der Fig. 7 auf seiner Unterseite angedockt und vergleichbar dem Einfüllvorgang findet der Entleervorgang für den Kannensack 20 über die Empfangseinrichtung 40 statt. Um ein Schließen des Transportweges zu erreichen, sind die weiteren Anschlussteile 54 im Bereich des schlauchförmigen jeweiligen Übergangs zum ersten Anschlussteil 14 wiederum mit Schließeinrichtungen 42 versehen, wie sie beispielhaft für eine Schließeinrichtung 42 in den Fig. 5 und 6 dargestellt sind.

Soll nun ein neuer Kannensack 20 befüllt werden, wird, in Blickrichtung auf die Fig. 2 gesehen, das zunächst im Einsatz befindliche weitere Anschlussteil 54 von seiner unteren Entnahmeposition im Uhrzeigersinn nach links oben weggeklappt und in Pfeilrichtung wird das nächste weitere Anschlussteil 54 in der Reihenfolge in die Abgabeposition eingeschwenkt. Ist dieses Anschlussteil 54 für einen Entnahmevorgang wiederum verbraucht, wird es wiederum nach links oben weggeklappt und das nächste weitere Anschlussteil 54 kommt zum Einsatz, bis alle Anschlussteile aufgebraucht sind. Im dahingehenden Fall ist dann die Kupplungseinrichtung 56 gegen eine neue Kupplungseinrichtung 56 zu tauschen. Vergleichbares gilt für den Entnahmefall gemäß der Darstellung nach der Fig. 4, wobei das gerade in Eingriff befindliche weitere Anschlussteil 54 nach seinem Gebrauch entgegen dem Uhrzeigersinn nach links oben weggeklappt wird und das in der Reihenfolge nachgeführte weitere Anschlussteil 54 mit seinem Kupplungsring 18 wird in Pfeilrichtung nach der Fig. 4 in seine Abgabeposition gebracht. Sind auch für die Entnahme alle weiteren Anschlussteile 54 aufgebraucht, ist die dortige Kupplungseinrichtung 56 gegen eine neue Einrichtung 56 zu tauschen. Bei nur einmaligem Gebrauch eines jeden weiteren Anschlussteils 54 lassen sich fünf Kannensäcke 20 befüllen und entleeren, bevor eine neue Kupplungseinrichtung 56 jeweils auf der Aufnahme- und der Abgabeseite zum Einsatz kommt.

Die Ausführungsform nach der Fig. 8 stimmt mit der Ausführungsform nach der Fig. 7 von der grundlegenden Funktion her weitgehend überein. Bei der Kupplungseinrichtung nach der Fig. 8 kommen jedoch anstelle von Kupplungsringen 18 Verschluss-Profilleisten 68 zum Einsatz, deren Funktion im Einzelnen in dem Gebrauchsmuster DE 20 2010 015 525 U1 beschrieben ist. Die dahingehenden Verschlussprofilleisten 68 lassen sich zwanglos mit korrespondierenden Verschlussprofilleisten (nicht dargestellt) eines Befüll- oder Abgabesystems ohne weiteres kombinieren

Des Weiteren besteht bei einer nicht näher dargestellten Ausführungsform die Möglichkeit, eine Vielzahl von Kannensäcken 20, vergleichbar der Lösung nach den Fig. 7 und 8, an einem ersten gemeinsamen Anschlussteil 14 zusammenzuführen, von dort, vergleichbar der Darstellung nach der Fig. 9, die einzelnen Transportsäcke in der Art von Folienschläuchen 58 wegzuführen und entsprechend über Schweißlinien 62 zu verschweißen, wobei dann jeder Kannensack 20 an seinem anderen freien Ende über einen eigenständigen Anschluss verfügt, sei es in Form von Verschluss-Profilleisten 68, sei es in Form von Kupplungsringen 18. An der unteren Abgabeseite eines jeden Kannensacks 20 kann dessen Abgabeöffnung wiederum, insbesondere bei einer Ausgestaltung mit Kupplungsringen 18, mit einer Schließeinrichtung 42 versehen sein.

Bei einer nicht näher dargestellten Ausführungsform können die Kupplungsringe 18 oder die Verschluss-Profilleisten 68 durch einen wieder öffenbaren Haftverschluss ersetzt sein, bei dem regelmäßig Schlaufen eines Haftverschlussteils in Eingriff bringbar sind mit Verschlusshaken eines anderen korrespondierenden Haftverschlussteils. Ferner können auf gegenüberliegenden Seiten eines jeden Gebindes unterschiedlich konzipierte Anschlussteile verwendet werden. So kann auf einer Seite eines Gebindes ein Kupplungsring 18 zum Einsatz kommen und auf der anderen, gegenüberliegenden Seite des Gebindes die Verschluss-Profilleisten 68. Auch können die Durchmesser der Anschluss- und Verbindungsteile auf gegenüberliegenden Seiten eines Gebindes unterschiedlich ausgebildet sein. Des Weiteren besteht die Möglichkeit, mehrere weitere Anschlussteile einer Kupplungseinrichtung 56 vom Durchmesser her unterschiedlich zu gestalten.

## Patentansprüche

1. Transportsystem für schütt- und fließfähige Medien mit einer Kupplungseinrichtung (56), bestehend aus mindestens einem ersten Anschlussteil (14) und mehreren weiteren Anschlussteilen (54), die mittels flexiblen, schlauchförmigen Verbindungsteilen (16) mit dem jeweils ersten Anschlussteil (14) verbunden sind, die mittels mindestens einer Schließeinrichtung (42, 68) sperrbar sind, nach deren Lösen das jeweils zuordenbare Verbindungsteil (16) für einen Medientransport freigegeben und nach erfolgtem Medientransport entlang eines vorgebbaren Transportweges dieser mittels einer separaten Blockiereinrichtung (64) blockiert oder von der Schließeinrichtung (42, 68) erneut verschlossen ist, wobei das jeweilige Verbindungsteil (16) ein Schlauchteil (58) aufweist, und wobei die einzelnen Schlauchteile (58) nacheinander folgend derart miteinander verbunden sind, dass in Folge Verzweigungsstellen (60) entstehen, die permanent medienführend mit dem ersten Schlauchteil (58) in der Folge verbunden sind, **dadurch gekennzeichnet, dass** das jeweilige Schlauchteil (58) ein Folienschlauch ist und dass einzelne Folienschläuche (58), die zu den einzelnen weiteren Anschlussteilen (54) führen, in Hintereinanderabfolge an Verzweigungsstellen (60) mit dem jeweils vorangehenden Folienschlauch (58) unter Freilassen einer Durchtrittsöffnung nebst Bildung eines durchgängigen Transportweges entlang von Schweißlinien (62) miteinander verschweißt sind.

2. Transportsystem nach Anspruch 1, **dadurch gekennzeichnet, dass** sich zumindest bei einem Teil der eingesetzten Schlauchteile (58) an diese in einstückiger Weise Transportgebinde anschließen, wie Säcke (20) oder Beutel.

3. Transportsystem nach Anspruch 1 oder 2, **dadurch gekennzeichnet, dass**, um ein ungewolltes Verschließen der Folienbahnen untereinander zu vermeiden, entlang den Verzweigungsstellen (60) in die Folienschläuche (58) temperaturbeständige Abdeckungen eingebracht sind, die beim Schweißvorgang das jeweils darunterliegende Folienmaterial vor thermischer Beschädigung schützen.

4. Transportsystem nach einem der vorstehenden Ansprüche, **dadurch gekennzeichnet, dass** das jeweils erste Anschlussteil (14) dem wiederlösbaren Andocken an eine Medien-Abgabeeinrichtung (10) dient.

5. Transportsystem nach einem der Ansprüche 2 bis 4, **dadurch gekennzeichnet, dass** an die weiteren Anschlussteile (54) in Hintereinanderfolge die einzelnen Transportgebinde (20) mit ihrem einen freien Ende andockbar sind, nach deren Befüllen mittels der Blockiereinrichtung (62) der Transportweg zwischen diesem weiteren Anschlussteil (54) und dem Transportgebinde (20) dauerhaft durchtrennt ist.

6. Transportsystem nach einem der Ansprüche 2 bis 5, **dadurch gekennzeichnet, dass** das andere freie Ende des Transportgebindes (20) mittels der Schließeinrichtung (42, 68) in wieder lösbarer Weise sperrbar ist und das mindestens ein weiteres Anschlussteil (54) oder ein sonstiges Andockmittel (38) aufweist, zwecks Andocken an eine Medien-Empfangseinrichtung (40) für die Abgabe des zu transportierenden Mediums.

7. Transportsystem nach einem der Ansprüche 4 bis 6, **dadurch gekennzeichnet, dass**, sofern die einander gegenüberliegenden Wände des jeweiligen Verbindungsteils (16) entlang der zuordenbaren Schweißlinie (62) noch aneinanderhaften, diese unter Freigabe des Transportweges auseinandergedrückt sind, sobald Füllgut vonseiten der Abgabeeinrichtung (10) in das Verbindungsteil (16) und weiter in Richtung des Transportgebindes (20) gelangt.

8. Transportsystem nach einem der vorstehenden Ansprüche, **dadurch gekennzeichnet, dass** ein einzelnes erstes Anschlussteil (14) vorhanden ist und 3 bis 20, bevorzugt 4 bis 10, besonders bevorzugt 4 bis 8, weitere Anschlussteile (54) in einer Kupplungseinrichtung (56) zusammengefasst vorhanden sind.

9. Transportsystem nach einem der vorstehenden Ansprüche, **dadurch gekennzeichnet, dass** die verschiedenen Anschlussteile (14, 54) unter Bildung der wiederlösbaren Kupplungseinrichtungen (56) aus
- ineinandergreifenden Kupplungsringen (18) gebildet sind;
- miteinander korrespondierenden Profilleisten (68) gebildet sind; oder
- komplementär zueinander ausgebildeten Haftverschlussteilen bestehen, die miteinander einen Haftverschluss ergeben.

## Claims

1. Transport system for pourable and flowable media having a coupling device (56), consisting of at least one first connection part (14) and a plurality of further connection parts (54), which are connected to the first connection part (14) by means of flexible, tubular connecting parts (16), which can be blocked by means of at least one closing device (42, 68), after the release of which the respective assignable connecting part (16) is open for media transport, wherein, after media transport has occurred along a specifiable transport path, said transport path is blocked by means of a separate blocking device (64) or is closed again by the closing device (42, 68), wherein the respective connecting part (16) has a tube part (58), and wherein the individual tube parts (58) are successively connected to each other in such a way that branching points (60) arise in succession, which tube parts are permanently connected in a media-carrying manner to the first tube part (58) in the sequence, **characterised in that** the respective tube part (58) is a film tube and **in that** individual film tubes (58), which lead to the individual further connection parts (54), are welded in sequence to the respective preceding film tube (58) at branching points (60), leaving an opening free and also forming a continuous transport path along welding lines (62).

2. Transport system according to claim 1, **characterised in that** transport containers, such as sacks (20) or bags, connect in a one-piece manner to at least some of the tube parts (58) used.

3. Transport system according to claim 1 or 2, **characterised in that**, in order to prevent unintentional closing of the film webs among each other, temperature-resistant covers are introduced into the film tubes (58) along the branching points (60), which covers protect the respective underlying film material from thermal damage during the welding process.

4. Transport system according to one of the preceding claims, **characterised in that** the respective first connection part (14) is used for releasable docking to a media dispensing device (10).

5. Transport system according to one of claims 2 to 4, **characterised in that** the individual transport containers (20) can be docked in sequence to the further connection parts (54) with their one free end, the transport path between this further connection part (54) and the transport container (20) being permanently severed by means of the blocking device (62) after said transport containers have been filled.

6. Transport system according to one of claims 2 to 5, **characterised in that** the other free end of the transport container (20) can be blocked in a releasable manner by means of the closing device (42, 68) and **in that** it has at least one further connection part (54) or other docking means (38) for docking to a media receiving device (40) for dispensing the medium to be transported.

7. Transport system according to one of claims 4 to 6, **characterised in that**, if the opposing walls of the respective connecting part (16) still adhere to each other along the assignable welding line (62), they are pushed apart on releasing the transport path,
as soon as filling material on the part of the dispensing device (10) gets into the connecting part (16) and further in the direction of the transport container (20).

8. Transport system according to one of the preceding claims, **characterised in that** a single first connection part (14) is present and 3 to 20, preferably 4 to 10, especially preferably 4 to 8, further connection parts (54) are present combined in a coupling device (56).

9. Transport system according to one of the preceding claims, **characterised in that** the various connection parts (14, 54) forming the releasable coupling devices (56) are composed of
- interlocking coupling rings (18);
- mutually corresponding profile strips (68); or
- consist of adhesive closure parts which are designed complementary to each other and together make an adhesive closure.

## Revendications

1. Système de transport de milieux déversables et aptes à s'écouler, comprenant un dispositif (56) d'accouplement, constitué d'au moins une première partie (14) de raccordement et de plusieurs autres parties (54) de raccordement, qui sont reliées à la, respectivement, première partie (14) de raccordement au moyen de parties (16) de liaison tubulaires souples, qui peuvent être fermées au moyen d'un dispositif (42, 68) de fermeture, après l'ouverture duquel la partie (16) de liaison respective pouvant être associée est dégagée pour un transport de milieux et après que le transport de milieux a été effectué suivant un chemin de transport pouvant être donné à l'avance, celui-ci est obturé au moyen d'un dispositif (64) d'obturation distinct ou est refermé par le dispositif (42, 68) de fermeture, la partie (16) respective de liaison ayant une partie (58) de tube souple, les diverses parties (58) de tube souple se succédant étant reliées les unes aux autres, de manière à créer en succession des points (60) de bifurcation, qui sont reliés en permanence, en conduisant des milieux, en succession à la première partie (58) de tube souple, **caractérisé en ce que** la partie (58) respective de tube souple est un tube souple en feuille et **en ce que** divers tubes (58) souples en feuille, qui mènent aux diverses autres parties (54) de raccordement, sont, dans l'ordre successif des points (60) de bifurcation, soudés entre eux suivant des lignes (62) de soudure au tube (58) souple en feuille précédent, en laissant une ouverture de passage outre la formation d'un chemin de transport continu.

2. Système de transport suivant la revendication 1, **caractérisé en ce qu'**au moins pour une partie des parties (58) de tube souple utilisées, des emballages de transport, comme des sacs (20) ou des sachets, à la façon d'une seule pièce, s'y raccordent.

3. Système de transport suivant la revendication 1 ou 2, **caractérisé en ce que**, pour empêcher une fermeture involontaire des bandes de feuille entre elles, il est mis, le long des points (60) de bifurcation, dans les tubes (58) souples en feuille, des recouvrements résistant à la température, qui, lors du soudage, protègent la matière en feuille sous-jacente d'un endommagement thermique.

4. Système de transport suivant l'une des revendications précédentes, **caractérisé en ce que** la première partie (14) de raccordement respective sert à s'adapter d'une manière pouvant être redéfaite à un dispositif (10) de distribution de milieux.

5. Système de transport suivant l'une des revendications 2 à 4, **caractérisé en ce qu'**aux autres parties (54) de raccordement, les divers récipients (20) de transport peuvent, successivement, être adaptés par leur une extrémité libre, le chemin de transport entre cette autre partie (54) de raccordement et le récipient (20) de transport peut, après son remplissage, être interrompu durablement au moyen du dispositif (64) d'obturation.

6. Système de transport suivant l'une des revendications 2 à 5, **caractérisé en ce que** l'autre extrémité libre du récipient (20) de transport peut, au moyen du dispositif (42, 68) de fermeture, être obturée, avec possibilité d'être redégagée, et a la au moins une autre partie (54) de raccordement ou un autre moyen (38) d'adaptation en vue de l'adaptation à un dispositif (40) de réception de milieux pour la distribution du milieu à transporter.

7. Système de transport suivant l'une des revendications 4 à 6, **caractérisé en ce que**, dans la mesure où les parois opposées l'une à l'autre de la partie (16) de liaison respective adhèrent encore l'une à l'autre le long des lignes (62) de soudure pouvant être associées, celles-ci sont, en dégageant le chemin de transport, repoussées l'une de l'autre, dès que du produit de charge arrive du dispositif (10) de distribution à la partie (16) de liaison et continue en direction du récipient (10) de transport.

8. Système de transport suivant l'une des revendications précédentes, **caractérisé en ce qu'**il y a une première partie (14) de raccordement individuelle et de 3 à 20, de préférence de 4 à 10, d'une manière particulièrement préférée de 4 à 8, autres parties (54) de raccordement, qui sont rassemblées dans un dispositif (56) d'accouplement.

9. Système de transport suivant l'une des revendications précédentes, **caractérisé en ce que** les diverses parties (14, 54) de raccordement sont formées avec formation de dispositifs (56) d'accouplement pouvant être désaccouplés à nouveau
- d'anneaux (18) d'accouplement s'interpénétrant ;
- de baguettes (68) profilées se correspondant entre elles ; ou
- de parties de fermeture autoagrippante constituées de manière complémentaire entre elles, qui donnent, entre elles, une fermeture autoagrippante.
